(19) Europäisches Patentamt

European Patent Office

Office européen des brevets

(11) Publication number: **0 467 312 A2**

# (12) EUROPEAN PATENT APPLICATION

(21) Application number: **91111883.4**

(22) Date of filing: **16.07.91**

(51) Int. Cl.⁵: **G11B 27/30**, G11B 7/00

(30) Priority: **16.07.90 JP 187767/90**
**19.07.90 JP 192219/90**

(43) Date of publication of application:
**22.01.92 Bulletin 92/04**

(84) Designated Contracting States:
**AT BE CH DE DK ES FR GB GR IT LI NL SE**

(71) Applicant: **OMRON CORPORATION**
**10, Tsuchido-cho, Hanazono, Ukyo-ku,**
**Kyoto-shi, Kyoto-fu(JP)**

(72) Inventor: **Sogou, Kouji c/o Omron Corporation**
**Intellectual Property Center, 20, Igadera**
**Shimokaiinji, Nagaokayo-shi, Kyoto 617(JP)**
Inventor: **Yoda, Shigeru, c/o Omron**
**Corporation**
**Intellectual Property Center, 20, Igadera**
**Shimokaiinji, Nagaokayo-shi, Kyoto 617(JP)**

(74) Representative: **WILHELMS, KILIAN &**
**PARTNER Patentanwälte**
**Eduard-Schmid-Strasse 2**
**W-8000 München 90(DE)**

(54) **Optical recording and reproducing apparatus and method.**

(57) Based on a pit detection signal S2 representing a pit recorded on an optical card, a data demodulator circuit 40 produces a synchronization signal S3. A time width generator circuit 60 creates a signal representing a period T of the synchronization signal S3. In an additional first pit record timing generator circuit 80, a delay time preset circuit 81 is loaded with a period of time Ts from a point of time associated with a leading edge of a record pulse S10 to a point of time related to a center of a pit to be formed by the record pulse. A subtractor circuit 82 computes TD = T - Ts. When the time TD is elapsed after an occurrence of the pit detection signal S2, a comparator circuit 82 produces a first pit pulse signal S30. Based on the first pit pulse signal S30, a record pulse S10 is generated to record the first pit on the medium.

Fig.9

BACKGROUND OF THE INVENTION

Field of the Invention

The present invention relates to an optical recording and reproducing apparatus and to an optical recording and reproducing method in which a spot light is emitted from a recording projection optical system including a semiconductor laser onto an optical recording medium (an optical card, an optical disk, or the like) to form therein pits assocaited with given data to be recorded on the medium; moreover, a reproducing projection optical system emits a spot light onto the optical recording medium to convert a reflection light therefrom into an electric signal by a reproducing optical system for receiving lights including light receiving elements, thereby reading out therefrom the data represented by the pits, and in particular, to an optical recording and reproducing apparatus and an optical recording and reproducing method of a write-once read-many (WORM) type wherein a recording area following the pits recorded in the optical recoding medium is used to additionally create therein pits representing data, thereby recording the new data.

Description of Related Art

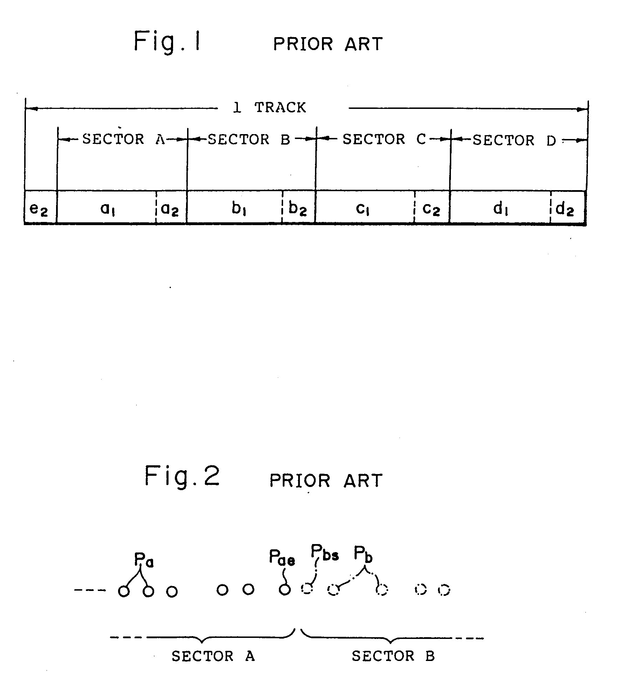

Fig. 1 shows a known format (i.e. a continous WORM format) employed in an optical recording and reproducing apparatus of this kind to record data by use of pits created in a track formed on an optical recording medium having a contour of a card.

According to the continuous WORM format shown in Fig. 1, a track of the optical recording medium comprises a plurality of sectors, for example, sectors A, B, C, and D, which are prepared to be consecutive to each other. The sectors A to D respectively comprise data fields $a_1$, $b_1$, $c_1$, and $d_1$ to be loaded with data and sector information fields $a_2$, $b_2$, $c_2$, and $d_2$ in which information related to the respective sectors is to be recorded. Each track has a header portion $e_2$ serving as a track information field. In the continuous WORM format, the sectors are formed in a consecutive manner, namely, there is not used any space between the sectors, for example, a space to be used as a boundary indication therebetween. For example, as shown in Fig. 2, a final pit Pae of pits Pa recorded (formed) in a sector A is immediately followed by a first pit Pbs of pits Pb created in a succeeding sector B (i.e. a write-once operation is conducted for an additional data recording sector).

In order to sequentially reproduce data recorded in the sectors A and B with an appropriate synchronization, when the apparatus additionally writes data in the sector B following the sector A, the first pit Pbs of the sector B is required to be formed at a position synchronized with the last pit Pae of the sector A. That is, an appropriate interval need be kept retained between the pits Pae and Pbs to execute the consecutive reproduction of data from the sectors A and B. The sector A includes an ending portion as the sector information field $a_2$ as described above. This field is disposed to form therein pits representing a mark or a pattern (a sector end pattern) indicating the end of sector. The optical recording and reproducing apparatus is required to include means which correctly reads out the sector end pattern therefrom to produce the first pit Pbs of the sector B for the next recording operation, the pit Pbs being created at a position appropriately synchronized with the last pit Pae of the sector A.

In the Japanese Patent Application Serial No. 1-44022 (1989) (U.S. Patent Application Serial No. 481, 329 and E.P. Application No. 90 103 256.5), the present Applicant has already proposed an optical recording and reproducing apparatus including a recording circuit which is capable of recording, at a position correctly synchronized with a final pit of a recorded sector of a recording medium, a first pit of a sector subsequent to the recorded sector; moreover, which is capable of recording additional record pits in such a manner that for a positional deviation of pits already recorded in the recording medium, a pit recorded thereafter is not associated with an abrupt positional deviation as compared with the deviation of the preceding pits.

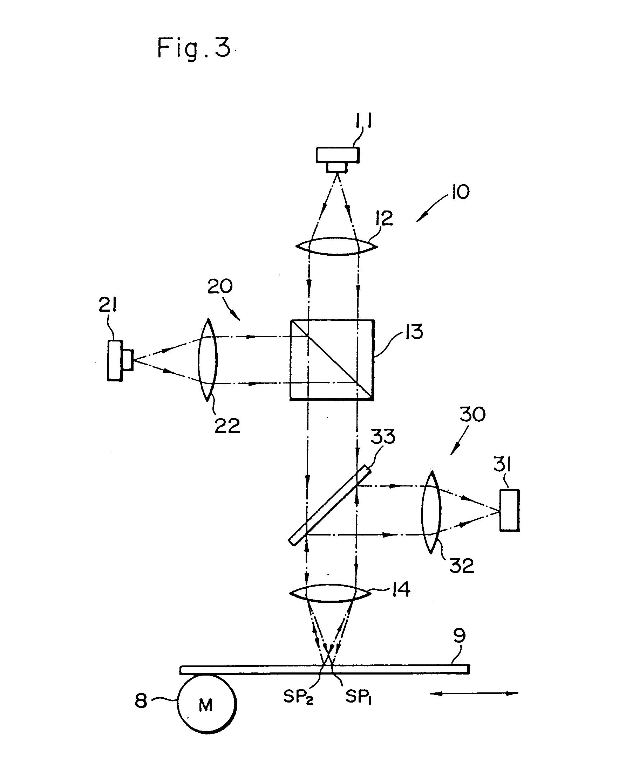

Referring now to Figs. 3 to 7, a description will be given of the constitution and the operation of an optical recording and reproducing apparatus disclosed by the above prior JP, US or EP application.

Fig. 3 shows the configuration of an optical system employed in the recording and reproducing apparatus to achieve optical recording and reproducing operations. This optical system uses an optical card 9 as an example of an optical recording medium.

The optical card 9 is transported along a longitudinal direction thereof (i.e. along an extending direction of a track) in a reciprocating fashion by a card conveyor mechanism (not shown) activated by a motor 8 as a source of a driving force thereof. While the optical card 9 is being thus moved, information (data) is recorded on the optical card 9 or information (data) beforehand stored thereon in the form of pits is read therefrom.

The recording and reproducing optical system includes a recording projection optical system 10 for emitting a recording spot light $SP_1$ onto a track of the optical card 9, a reproducing projection optical system 20 for projecting a reproducing spot light $SP_2$ onto a track of the optical card 9, and a reproducing light reception optical system 30 for receiving a reflection light of the reproducing spot light $SP_2$ returned from the optical card 9 to reproduce data represented by pits created in the track of the optical card 9.

The recording projection optical system 10 is operated with a semiconductor laser 11 as a light source. A light emitted therefrom is collimated through a collimator lens 12 to be passed through a beam splitter 13 and a semitransparent mirror 33 so as to be focused by an objective 14 onto a track formed in the optical card 9. As a result, a recording spot light $SP_1$ is formed with a diameter of about one micrometer (μm). When the light spot $SP_1$ is irradiated onto the track of the optical card 9, the illuminated portion of the optical recording medium is thermally changed in an irreversible manner, thereby creating a pit in the medium. The semiconductor laser 11 is driven by pulsated signals.

When compared with a portion of the medium where a pit is not formed, a portion of the medium where a pit is formed develops a smaller value of a light reflection factor. In other view point, since the reflection light is scattered by the pit, the amount of light which is reflected from the portion of the pit and which reaches the light receiving elements is reduced as compared with the peripheral region where a pit is not formed. Resultantly, based on the reflection light from the optical card 9, presence/absence of the pit is detected and hence data can be read out from the optical recording medium, which will be described later.

The reproducing projection optical system 20 employs a light-emitting diode 21 as a light source thereof. The light produced from the diode 21 is collimated by a collimator lens 22 to be reflected by the beam splitter 13. The reflected light is then focused by the objective 14 onto a track of the optical card 9, thereby forming a reproducing spot light $SP_2$ having a diameter of several micrometers to several tens of micrometers. The position of the spot light $SP_2$ is slightly behind the recording spot light $SP_1$ in a direction in which the optical card 9 is transported in the recording mode of the apparatus. As a result, data recorded by the spot light $SP_1$ is reproduced by use of the reproducing spot light $SP_2$ immediately after the data recoding operation, thereby confirming the recorded data.

In the reproducing light reception optical system 30, the reflection light of the reproducing spot light $SP_2$ from the optical card 9 is passed through the objective 14 to be reflected on the semitransparent mirror 33. The reflected light is then collected by a condenser lens 32 to be received by a photodiode 31. Depending on a signal produced from the photodiode 31 in response to the received light, the presence or absence of a pit and hence data associated therewith is determined.

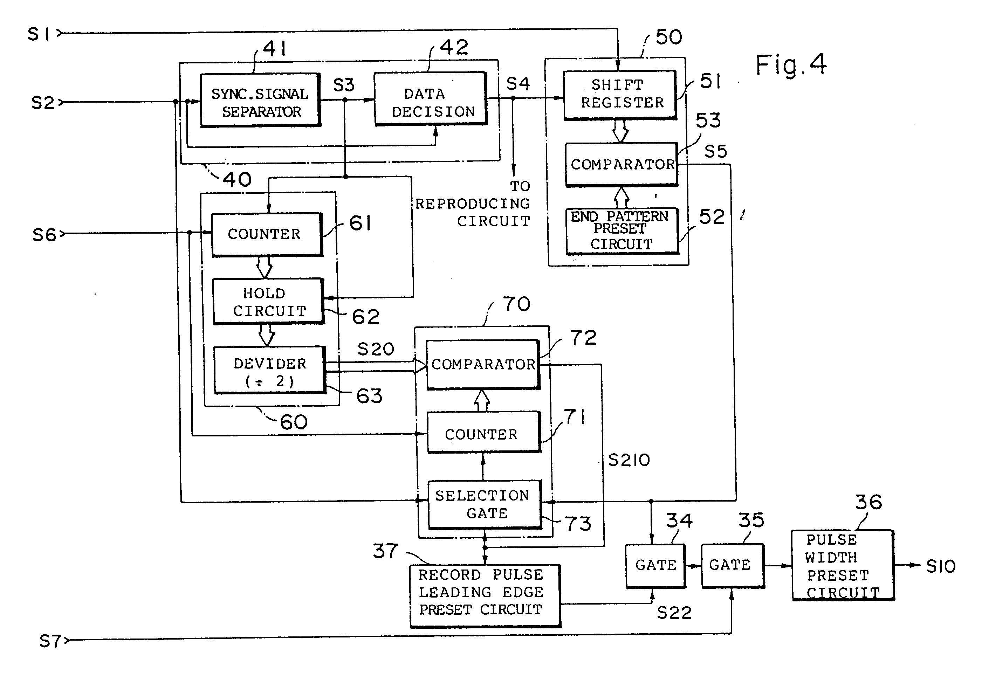

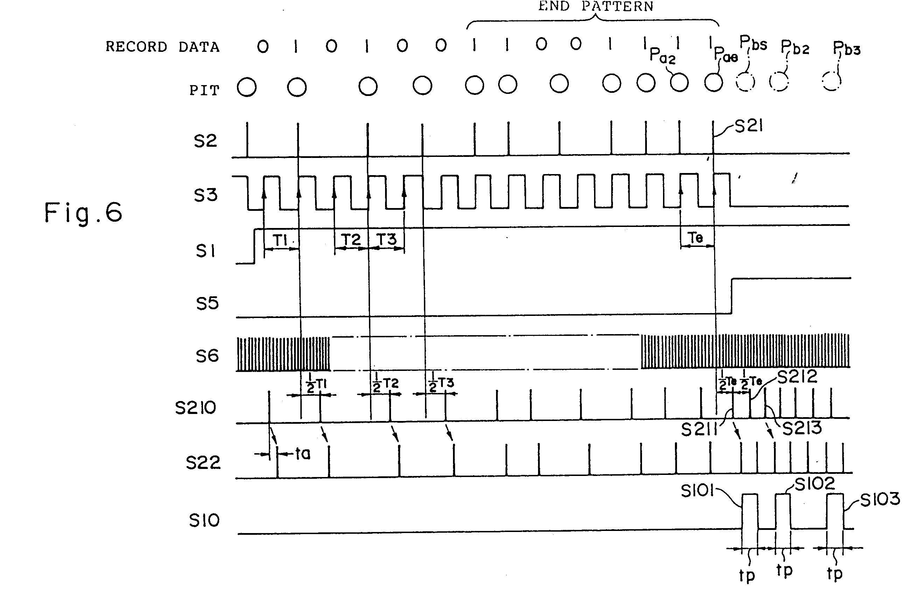

Fig. 4 is a block diagram showing a recording circuit (a portion thereof is commonly adopted for a reproducing circuit) disposed in the optical recording and reproducing apparatus, whereas Fig. 6 is a signal timing chart useful to explain the operation of the recording circuit.

For simplicity of the explanation, means for outputting record data to be stored in the form of pits in a track of the optical card, means for producing a detection instruction signal associated with a sector end pattern, and means for generating a high-frequency clock pulse for the operation are omitted in the constitution of Fig. 4.

In the signal timing chart of Fig. 6, a circle drawn with a solid line designates a pit, for example, a pit of the sector A, which has already been recorded on the optical card according to a modified frequency modulation procedure. A circle written with a dot-and-dash line indicates a pit to be recorded in the sector B following the sector A. In the recording circuit using the modified frequency modulation, an interval between pits is set to 1T, 1.5T or 2T so as to represent data of a value 1 and data of a value 0 (T stands for a predetermined unitary length).

Let us consider here a case where the apparatus detects an end pattern of the sector A of the optical card to record data in the sector B subsequent to the sector A.

The reproducing light reception optical system 30 scans pits created in the sector A. The photodiode 31 resultantly produces an output signal to be subjected to a waveform shaping. The shaped signal is then delivered as a pit detection signal S2 to a data demodulator circuit 40 including a synchronization signal separator circuit 41. In response thereto, the synchronization signal separator circuit 41 produces a sychronization signal S3.

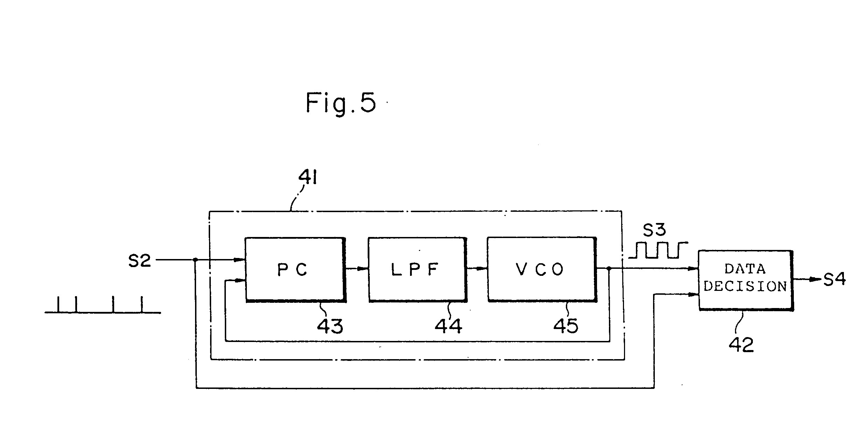

This circuit 41 comprises, as shown in Fig. 5, a phase-locked loop circuit constituted with a phase comparator circuit 43, a low-pass filter 44, and an oscillator circuit 45 of a voltage control type.

The synchronization signal S3 is fed to a data judge circuit 42 disposed in the data demodulator circuit 40. The data judge circuit 42 determines, if the pit detection signal S2 (more strictly, an after-synchronization pit signal, which will be described later) appears when the synchronization signal S3 is at a high level, that the data has a value "1". Otherwise, the value of the data is decided to be "0". Moreover, the judge result is passed as a data signal S4 to a pattern detector circuit 50. When the end pattern detection instruction signal S1 is set to a high level, the data signal S4 is supplied in a serial fashion to a shift register 51 disposed in the pattern detector circuit 50.

This circuit 50 includes, in addition to the shift register 51, an end pattern preset circuit 52 in which an end pattern (data "11001111" in this embodiment") is beforehand established, and a comparator circuit 53 for comparing a pattern expressed by the data signal S4 loaded in the shift register 51 with the end pattern thus preset in the end pattern preset circuit 52, thereby producing an end pattern detection signal S5 when these patterns match each other.

A time width generator circuit 60 creates, based on the synchronization signal S3 from the synchronization signal separator circuit 41 of the data demodulator circuit 40, a time width signal S20 representing a time width equal to half (1/2) the period of the synchronization signal S3. This circuit 60 includes a counter 61, a count value hold circuit 62, and a divider circuit 63 dividing a received value by two. The counter 61 is reset at a leading edge of the synchronization signal S3 to start counting operation. The initial value of the counter is 0. Until reset by a subsequent leading edge of the synchronisation signal S3, the counter 61 continues counting the high-frequency clock pulses S6, thereby measuring the periods T1, T2, T3, ..., Te of the synchronization signal S3. The hold circuit 62 latches therein the counter value of the counter 61 at a leading edge of the sychronization signal S3. The divider 63 divides the content of the count value hold circuit 82 by two to produce a time width signal S20.

A record timing signal generator circuit 70 includes a counter 71 for counting the high-frequency clock pulses S6 to create a count signal, a comparator circuit 72 for comparing the time width signal S20 from the divider 63 with the count signal from the counter 71 to output a record timing signal S210 when these signals match each other, and a selection gate 73 for supplying the counter 71 with the pit detection signal S2 as a first reset signal and for supplying thereto, after receiving the end pattern detection signal S5 from the end pattern detector circuit 50, as a second reset signal the record timing signal S210 from the comaprator circuit 72. On receiving the first or second reset signal, the counter 71 starts the counting operation from the initial value "0".

A record pulse leading edge preset circuit 37 decides a leading edge (timing) of the record pulse S10 to activate the semiconductor laser so as to create pits in the optical recording medium. This circuit 37 produces a record pulse leading edge signal S22 which rises at a point of time delayed by a predetermined period of time ta relative to a record timing signal S210 associated therewith. The circuit 37 is beforehand loaded with the delay time ta so as to generate, in response to an input of the record timing signal S210, the pulse signal S22 at a point of time delayed relative to the signal S210 by the delay time ta.

A gate circuit 34 is enabled on receiving an end pattern detection signal S5 sent from the end pattern detector circuit 50, whereas a gate circuit 35 is controlled by a signal S7 representing data to be recorded on the recording medium. A pulse width preset circuit 36 is adopted to adjust a pulse width tp of the record pulse S10.

On receiving a pit detection signal S2, the synchronization signal separator circuit 41 of the data demodulator circuit 40 supplies a synchronization signal S3 to the counter 61 of the time width generator cirucit 60. The counter 61 is hence reset to initiate the counting operation, which is continuously achieved until the next leading edge of the synchronization signal S3 is detected, thereby obtaining the number of high-frequency clock pulses S6 given in this period. The count value of the counter 61 attained in a period of the synchronization signal S3 (corresponding to the respective periods T1, T2, ..., Te of the synchronization signal S3) is held in the count value hold circuit 62. The count value is then divided by two in the divider circuit 63 to be a time width signal S20, which is fed to the comparator circuit 72 of the record timing signal generator circuit 70.

In this circuit 70, the counter 71 is reset on receiving a pit detection signal S2 from the selection gate 73. The counter 71 in turn starts counting the high-frequency clock pulses S6. When the count value coincides with the value expressed by the time width signal S20, the comparator 72 outputs a record timing signal S210. In consequence, the record timing signal S210 is produced at a timing delayed from the generation timing of the pit detection signal S2 by a delay time, which is obtained by dividing by two the periods T1, T2, ..., Te of the synchronization signal (i.e. T1/2, T2/2, ..., Te/2). The record timing signal S210 is delivered to the record pulse leading edge preset circuit 37. Consequently, when the delay time ta is elapsed after an input of the record timing signal S210, this circuit 37 creates the record pulse leading edge signal S22. Of the record pulse leading edge signals S22, those created after the final pit Pae of the end pattern are detected (namely, after the end pattern detection signal S5 is set to a high level) are supplied via the gate circuits 34 and 35 to the pulse width preset circuit 36. The preset circuit 36 then outputs, as shown in Fig. 6, record pulses S10 (S101, S102, S103, etc.) in association with the record data signal S7 after the end pattern is detected.

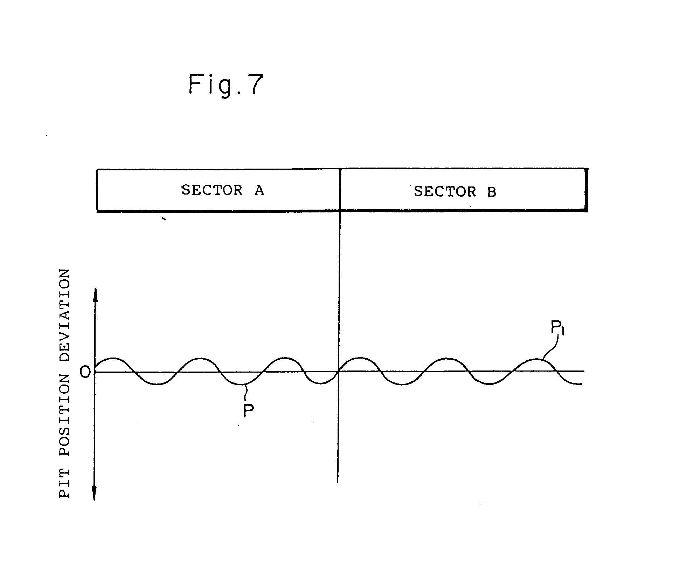

That is, in order to record, after the last pit Pae of the end pattern of sector, the first pit Pbs of the subsequent sector, the output timing of the record pulse S101 is determined by the record timing signal S211 generated when a period of time Te/2 is elapsed after the detection of the final pit Pae (i.e. the generation of the pit detection signal S21). The period Te employed here is identical to a period between a syncrhonization signal S3 assocociated with the detection of the last pit Pae and a synchronization signal S3 related to the detection of the previous pit Pa2. Namely, when the first pit Pbs is additionally recorded in the sector B of the optical card, there is reflected a bit position deviation between the last pit Pae and the preciding pit Pa2 of the end pattern. As a result, the quantity of the pit position deviation becomes to be continuous in the sectors A and B as indicated by letters P and $P_1$ in Fig. 7. This enables the data demodulator circuit 40 in a data reproducing operation to appropriately reproduce the data loaded in the sectors A and B. In this connection, the pit position deviation may occur, for example, due to a change in the transporting speed of the optical card 9 caused by an unstable rotation of the motor 8.

When a period of time Te/2 is elapsed after the detection of the final pit Pae, the record timign signal S211 is produced. Thereafter, since the gate 73 has already been supplied with the pattern detection signal S5, the counter 71 is reset by the record timing signal S210. The record timing signals S212, S213, etc. are created at an interval of Te/2.

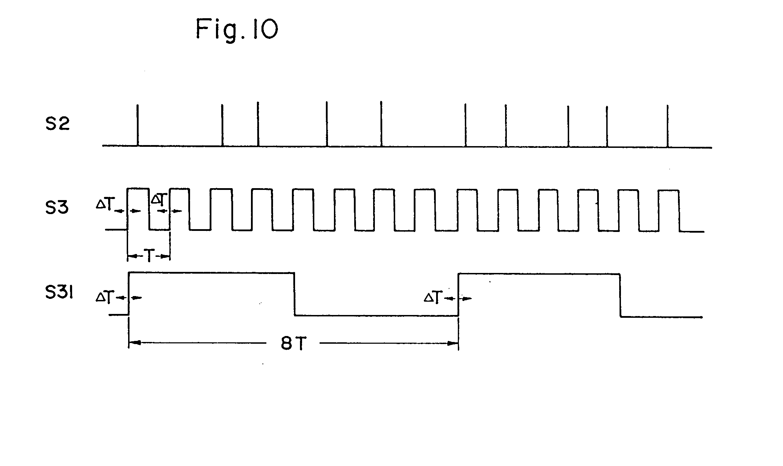

The synchronization signal S3 outputted from the synchronization signal separator 41 is related to a mean value of the periods of the pit detection signal S2 and is substantially associated with the interval of pits formed in a series. However, more precisely, the period of the synchronization signal S3 includes a jitter component $\Delta T$ as shown in Fig. 10.

Let us assume here that the jitter components of the leading and trailing edges of the synchronization signal S3 have standard deviations $\sigma_{T1}$ and $\sigma_{T2}$, respectively. Since the jitter components are contained in the leading and training edges of the signal S3, the square mean value thereof is computed as follows.

$$( \sigma_{T1}^2 + \sigma_{T2}^2)^{1/2}$$
$$= (2 \sigma_T^2)^{1/2}$$
$$= 2^{1/2}\sigma_T \qquad \ldots \qquad (1)$$

where, $\sigma_{T1} = \sigma_{T2} = \sigma_T$

Consequence, the time width represented by the time width signal S20 produced from the divider circuit 63 is expressed as

$$(T \pm 2^{1/2}\sigma_T )/2$$
$$= (T/2) \pm [2^{1/2}\sigma_T ]/2 \qquad (2)$$

Namely, there appears the following deviation.

$$[2^{1/2}\sigma_T ]/2 \qquad (3)$$

where, T represents the periods T1, T2, T3, etc. of the synchronization signal S3.

Assuming $\sigma_T$ to be in a range from about 2% to about 3%, $3\sigma_T$ becomes to be about 6% to abuot 9%. Namely, the following error will be included in the count value of the counter 71.

$$(2^{1/2}) 3\sigma_T/2 = 4 \text{ \% to } 6\% \qquad (4)$$

The error appears as a fluctuation of the pit interval in the additional recording operation. This may cause a synchronization failure in the additional recording area, which leads to a fear of a read error in the reproducing operation.

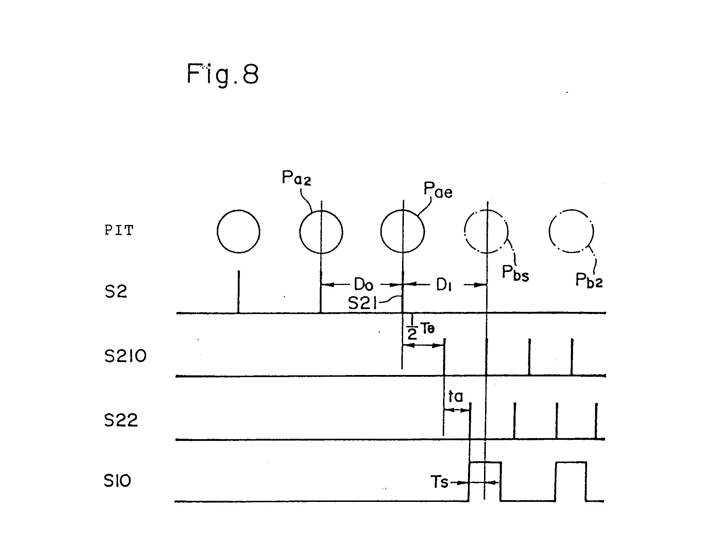

Fig. 8 is a magnified diagram showing various signals in the neighborhood of a boundary between a pit beforehand recorded and a pit additionally recorded by the optical recording and reproducing apparatus above.

A first pit Pbs to be additionally formed is separated by an interval $D_1$ from a last pit Pae beforehand recorded, which is represented as follows in terms of a period of time Ts from a leading edge of a record pulse S10 to a point of time equivalent to a center of the pit Pbs to be recorded by the record pulse S10 and a transporting speed V of the optical card 9.

$$D_1 = [ (Te/2) + ta + Ts ] V$$
$$= (Te/2) V + (ta + Ts) V \quad (5)$$

When the synchronization signal S3 and the pit detection signal S2 have a completely identical period, an interval $D_0$ between the final pit Pae and a pit Pa2 immediately therebefore is expressed as follows.

$$D_0 = Te V \quad (6)$$

Substituting Te obtained from the expression (6) in the expression (5),

$$D_1 = (D_0/2) + (ta + Ts) V \quad (7)$$

is attained. For $V = V_0$ (reference speed), when the preset time ta is set to a value for which the following equation holds,

$$(ta + Ts) V_0 = D_0/2 \quad (8)$$

$D_1 = D_0$ results. Namely, the interval $D_1$ between the last recorded pit Pae and the first additional pit Pbs can be set to be identical to the interval $D_0$ between the already recorded pits.

However, in a case where the speed V undergoes a change of 10% from the reference speed $V_0$ ($V = 1.1V_0$), since the values of ta and Ts are fixed, the interval $D_1$ is expressed as

$$D_1 = (D_0 / 2) + (ta + Ts) \times 1.1 V_0$$
$$= (D_0 / 2) + [D_0 / (2 V_0)] \times 1.1 V_0 = 1.05 D_0$$
$$\cdots (9)$$

Namely, the difference between the intervals $D_1$ and $D_0$ is obtained as 5% of $D_0$. Resulatntly, with the variation in the pit interval, a synchronization failure is likely to occur in the reproducing operation, which may lead to a read error in some cases.

SUMMARY OF THE INVENTION

It is therefore an object of the present invention to provide an optical recording and reproducing apparatus in which a record timing signal can be produced with a reduced error on the basis of a pit detection signal.

Another object of the present invention is to provide an optical recording and reproducing apparatus and an optical recording an reproducing method wherein when additionally recording a new pit on a recording medium following a last pit beforehand recorded thereon, even if a speed of the recording medium is changed, an interval between the last pit and the additional pit can be substantially identical to an interval of the pits already recorded in the medium.

Still another object of the present invention is to provide an optical recording and reproducing apparatus and an optical recording an reproducing method wherein in a configuration in which a noise component electrically and/or optically appearing therein is minimized to the possible extent, a position of a pit to be additionally recorded in a recording medium can be appropriately determined with respective to a last pit already recorded in the medium.

An optical recording and reproducing apparatus according to the first feature of the present invention is characterized by including synchronization signal generate means responsive to a detection signal of a pit recorded on a recording medium to represent data for generating a synchronization signal synchronized with the pit detection signal, time width generate means responsive to the synchronization signal for producing a time width signal representing a time width related to a period of the synchronization signal,

and timing signal generate means for creating a record timing signal having a delay associated with the period of the synchronization signal relative to a point of time when the pit detection signal is detected, said time width generate means comprising frequency divide means for dividing the frequency of the synchronization signal.

In the optical recording and reproducing apparatus according to the first feature of the present invention, assuming that the frequency divide means has a divisor "N" (N is an integer greater than one), the frequency devide means devides the frequency of the synchronization signal by N to produce an output signal. Consequently, the deviation of the time width of the time width signal is represented as

$$2^{1/2}\sigma_T / (2 \times N) \qquad (10)$$

and hence the error of the recording timing signal is reduced to 1/N of the original value. In consequence, the problem of the fluctution of the pit interval in the additional recording operation is almost removed. Moreover, in the reproducing operation, the read error due to the synchronization failure can be considerably minimized in the additional recording area.

In the optical recording and reproducing apparatus according to the first feature of the present invention, when generating a record timing signal based on a pit detection signal, the error of the record timing signal due to a jitter component can be decreased. Consequently, the deviation of the pit interval is minimized in the additional recording operation. Moreover, a read error occurring in the reproducing operation due to the synchronization failure in the additional recording area can be amazingly reduced. Furthermore, since the read retry count associated with the read error is decreased, the operation efficiency is improved. In addition, the number of tracks in which recorded data becomes to be unreproducible or unavailable is minimized, thereby substantially increasing the memory capacity of the recording medium.

An optical recording and reproducing apparatus according to the second feature of the present invention is characterized by including synchronization signal generate means responsive to a detection signal of a pit recorded on a recording medium to represent data for generating a synchronization signal synchronized with the pit detection signal, time width generate means responsive to the synchronization signal for producing a time width signal representing a period of the synchronization signal, and additional first pit record timing generate means responsive to the pit detection signal and the time width signal for producing a first pit pulse signal denoting a generation timing of a record pulse to produce a pit to be recorded at a position following the recorded pit.

The additional first pit record timing generate means comprises delay time preset means for setting a delay time between a point of time of a leading edge of the record pulse to a point of time associated with a center of a pit to be recorded by the record pulse, subtract means for computing and outputting a difference between the period of the synchronization signal indicated by the time width signal and the delay time established in the delay time preset means, and signal generate means for creating the first pit pulse signal when a period of time represented by the subtraction result from the subtract means is elapsed after the pit detection signal is received.

In a mode of embodying the second feature according to the present invention, the optical recording and reproducing apparatus further includes data demodulate means for judging to determine a state of the pit detection signal on the basis of the synchronization signal so as to demodulate data represented by the detected pit, end pattern detect means for generating an end pattern detection signal when predetermined end pattern data matches data attained by the data demodulate means, and means for producing the record pulse in response to the first pit pulse signal inputted after the generation of the end pattern detection signal and a record data signal representing data to be recorded.

In another mode of embodying the second feature, the apparatus further comprises record timing signal generate means responsive to the first pit pulse signal inputted after the generation of the end pattern detection signal for generating a record pulse leading edge signal with a period which is half that of the synchronization signal indicated by the time width signal, and means for producing the record pulse in response to the record pulse leading edge signal and a record data signal representing data to be recorded.

An optical recording and reproducing method according to the second feature of the present invention includes the steps of generating a synchronization signal synchronized with a detection signal of a pit representing data recorded on a recording medium, producing a time width signal representing a period of the synchronization signal, setting in advance a delay time from a point of time of a leading edge of a record pulse for forming a next pit to be recored next to a recorded pit to a point of time associated with a center of the pit to be recorded by the record pulse, computing a difference of time between the period of the synchronization signal indicated by the time width signal and the preset delay time, and creating the first pit pulse signal designating a generation timing of the record pulse when the period of time obtained as

7

a result of the computation is elapsed after the pit detection signal appears.

In an optical recording and reproducing apparatus and an optical recording and reproducing method according to the second feature of the present invention, additional first pit record timing signal means generates, in response to a pit detection signal, a signal designating a generation timing of the record pulse when a period of time equivalent to a difference between the period of the synchronization signal and the delay time is elapsed. Since the period of the synchronization signal is regulated depending on an interval of pits already recorded, when the transportation speed of the recording medium is varied, the period is also changed. Only the preset delay time serves as a factor causing an error in the interval between the last recorded pit and the additional pit. However, the delay time is considerably smaller than the period of the synchronization signal and hence the error related to the alteration in the recording medium speed can be retained to be a small value.

In an optical recording and reproducing apparatus and an optical recording and reproducing method according to the second feature of the present invention, even the recording medium speed is altered, the interval between the last recorded pit and the additional pit subsequent thereto becomes to be substantially equal to the interval betweem the pits beforehand recorded on the medium. Consequently, in the reproducing operation, the read error due to the synchronization failure is reduced in the additional pit area. Moreover, the reduction of the read error chance leads to the minimization of the number of read retry operations, which improves the operation efficiency. Furthermore, since the number of recording areas where recorded pits become to be unreproducible is decreased, the memory capacity of the recording medium is substantially increased.

According to the third feature of the present invention, an optical recording and reproducing apparatus comprises synchronization signal generate means responsive to a detection signal of a pit recorded on a recording medium to represent data for generating a synchronization signal synchronized with the pit detection signal, time width generate means responsive to the synchronization signal for generating a time width signal representing a time which is twice the period of the synchronization signal, and additional first pit record timing generate means responsive to the pit detection signal and the time width signal for generating a first pit pulse signal denoting a generation timing of a record pulse to create a pit to be recorded after the recorded pit.

The additional first pit record timing generate means includes delay time preset means for setting a delay time obtained by adding a first delay time from a point of time of a leading edge of the record pulse to one associated with a center of a pit to be recorded by the record pulse to a second delay time associated with filter means for removing a noise component from a read signal of the pit recorded on a recording medium to generate the pit detection signal, subtract means for computing and for outputting a difference between the time, which is twice the period of the synchronization signal, indicated by the time width signal and the total delay time set by the delay time preset means, and signal generate means for creating the first pit pulse signal when a period of time represented by a result of the subtraction accomplished by the subtract means is elapsed after the pit detection signal is received.

In a mode of embodying the third feature according to the present invention, the apparatus further includes data demodulate means for judging a state of the pit detection signal based on the synchronization signal to demodulate data represented by the detected pit, end pattern detect means for producing an end pattern detection signal when predetermined end pattern data created by excepting data represented by a last recorded pit matches data attained by said data demodulate means, and means for generating the record pulse in response to the first pit pulse signal inputted after an occurrence of the end pattern detection signal and a record data signal representing data to be recorded.

In another mode of embodying the third feature, the apparatus further comprises record timing signal generate means responsive to the first pit pulse signal inputted after the generation of the end pattern detection signal for generating a record pulse leading edge signal with a period which is half that of the synchronization signal indicated by the time width signal, and means for producing the record pulse in response to the record pulse leading edge signal and a record data signal representing data to be recorded.

An optical recording and reproducing method according to the third feature of the present invention includes the steps of generating a synchronization signal synchronized with a detection signal of a pit representing data recorded on a recording medium, producing a time width signal representing a time which is twice the period of the synchronization signal, setting in advance a delay time obtained by adding a first delay time from a point of time of a leading edge of a record pulse for forming a next pit to be recored subsequently to a recorded pit to a point of time associated with a center of the pit to be recorded by the record pulse to a second delay time of a filter means for removing a noise component from a read signal of the pit recorded on the recording medium to generate the pit detection signal, computing a difference of time between the time, which is twice the period of the synchronization signal, indicated by the time width signal and the total delay time preset in advance, and creating the first pit pulse signal designating a generation timing of the record pulse when the period of time obtained as a result of the computation is elapsed after the pit detection signal appears.

The optical recording and reproducing apparatus and the optical recording and reproducing method according to the third feature of the present invention includes as premise thereof the filter processing in which the read signal of a pit is filtered to considerably reduce the noise component electrically and/or optically appearing in the pit read signal. The steeper the attenuation characteristic of the filter is, the greater is the removed noise component; however, the delay time is resultantly elongated and hence the pit detection signal is also delayed.

According to the third feature of the present invention, on the basis of the detection of the second last pit selected from the recorded pits, the record timing signal is produced for a pit to be next recorded. Even when the pit detection signal is remarkably delayed, the delay time does not exceed the period of time equivalent to the pit interval. In consequence, there remains a marginal period of time sufficient to produce the record timing signal. Moreover, in accordance with the principle of the third feature of the invention, which is identical to that of the second feature thereof, the record timing signal can be created at an appropriate point of time.

According to the optical recording and reproducing apparatus and the optical recording and reproducing method of the third feature of the present invention, there can be employed a filter having a steep attenuation characteristic to remarkably remove the noise component. Utilization of such a filter enables the apparatus to develop a pit detection signal in which the noise component electrically and/or optically appering therein is reduced to the maximum extent. Since the pit detection signal is adopted to generate the timing signal for the additional pit recording operation, the additional pits are recorded with a reduced deviation in the interval therebetween, thereby minimizing the recording and reproducing errors.

This is also the case of a distorted pit, i.e. the errors are reduced when recording and reproducing such a distored pit. Moreover, even when there exist a waveform distortion caused by a structure of an optical system employed and a signal waveform distortion associated with a change appearing in the apparatus with a lapse of time, a change in the environment of the apparatus, or the like, the recording and reproducing errors can be minimized for the same reason.

BRIEF DESCRIPTON OF THE DRAWINGS

These and other objects and advantages of the present invention will become apparent by reference to the following description and accompanying drawings wherein:

Fig. 1 is a schematic diagram showing the format used in the continuous write-once read-many (WORM) system;

Fig. 2 is a diagram illustratively showing pits formed in the format;

Fig. 3 is a diagram showing the configuration of an optical system of an optical recording and reproducing apparatus acording to the prior invention;

Fig. 4 is a block diagram showing the electric circuit constitution of the optical recording and reproducing apparatus of the prior invention;

Fig. 5 is a block diagram showing an example of a synchronization signal separator circuit;

Fig. 6 is a signal timing chart useful to explain the operation of the optical recording and reproducing apparatus of the prior invention;

Fig. 7 is a diagram schematically showing a state where the deviation of the pit position is continuously changed in a boundary between two sectors;

Fig. 8 is a signal timing chart usefult to explain problems of the prior invention;

Fig. 9 is a block diagram showing the constitution of an optical recording and reproducing apparatus in a first embodiment according to the present invention;

Fig. 10 is a block diagram showing the operation of the optical recording and reproducing apparatus in the first embodiment according to the present invention;

Fig. 11 is a block diagram showing the electric circuit constitution of an optical recording and reproducing apparatus in a second embodiment according to the present invention;

Fig. 12 is a signal timing chart useful to explain the operation of the optical recording and reproducing apparatus in the second embodiment according to the present invention;

Fig. 13 is a diagram showing in a magnified view a portion of the timing chart of Fig. 12;

Fig. 14 is a graph showing waveforms in states where a jitter appears due to a noise contained in a read RF signal and a delay occurs when the read RF signal is passed through a filter circuit;

Fig. 15 is a signal timing chart useful to explain the modified frequency modulation;

Fig. 16 is a block diagram showing the electric circuit constitution of an optical recording and reproducing apparatus in a third embodiment according to the present invention;

Fig. 17 is a signal timing chart useful to explain the operation of the optical recording and reproducing apparatus in a third embodiment of the present invention;

Fig. 18 is a diagram showing in a magnified view a portion of the signal timing chart of Fig. 17; and

Fig. 19 is a diagram showing the circuit configuration of an example of an end pattern detector circuit.

## DESCRIPTION OF THE PREFERRED EMBODIMENTS

### First Embodiment

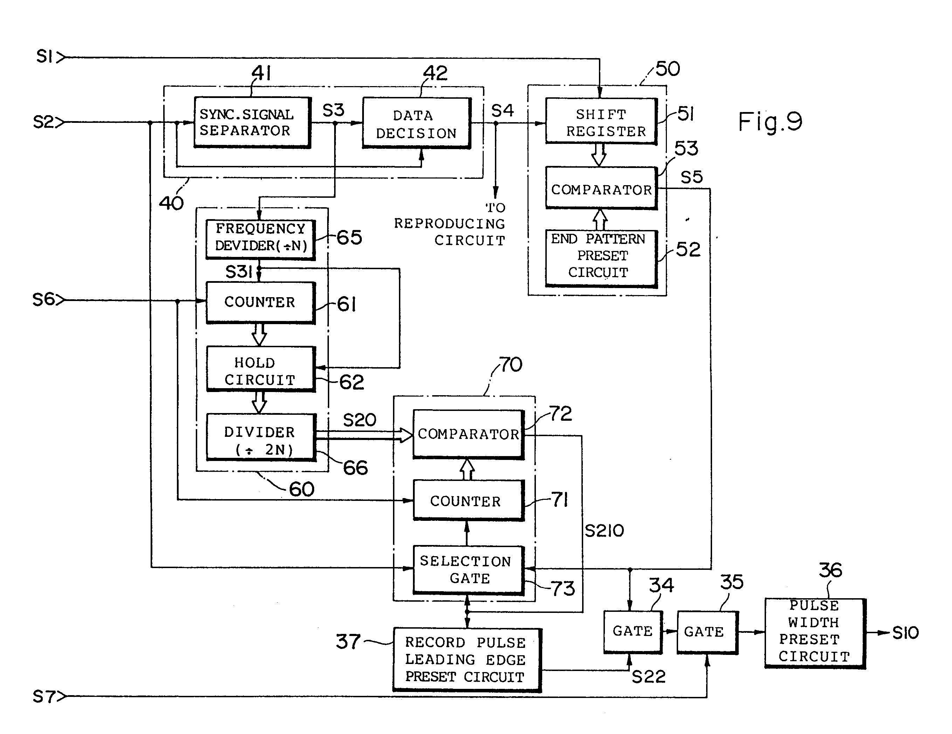

Fig. 9 shows the configuration of an embodiment (a first embodiment) of an optical recording and reproducing apparatus according to the first feature of the present invention. In this constitution, the same constituent components as those of the aforementioned invention of Fig. 4 are assigned with the same reference numerals, and a redundant description thereof will be avoided. The discrepancy between the first embodiment of Fig. 9 and the circuit system of Fig. 4 resides in that a time width generator circuit 60 of Fig. 9 includes a frequency divider circuit 65 dividing a frequency of a synchronization signal S3 by N (N is an integer greater than one) and that the divider circuit 63 of the configuration shown in Fig. 4 is replaced with a divider circuit 66 having a divisor "2N" in the first embodiment of Fig. 9.

The frequency divider circuit 65 supplies a signal S31 as a reset signal to the counter 61, the signal S31 having a period which is N times the period of the synchronization signal S3. The counter 61 counts, for a period of the signal S31 from the frequency divider circuit 65, high-frequency pulse signals S6. A count value thus developed is retained in a count value hold circuit 62. The divider circuit 66 divides by 2N the count value kept in the hold circuit 62, the count value indicating a period of the output signal S31 from the frequency divider circuit 65. A value resultant from the division is fed to a record timing signal generator circuit 70.

Fig. 10 shows the output signal S31 produced from the divider circuit frequency 65 when the divisor N thereof is set to eight. Since a jitter component $\Delta T$ appears only in first and last edge portions of the signal S31 outputted from the frequency divider circuit 65, when a value representing the period 8T (T stands for the period of the synchronization signal S3) of the output signal S31 from the frequency divider circuit 65 is divided by a value "2 X 8" as follows,

$$(8T \pm 2^{1/2}\sigma_T) / 16 = T/2 \pm (2^{1/2}) \sigma_T/16 \qquad (11)$$

the deviation can be reduced to

$$(2^{1/2}) \sigma_T/16 \qquad (12)$$

That is, in general, when using the signal divided by N in the operation above, the error can be reduced to 1/N of the original value. For example, when the value of N is set to 16, the fluctuation can minimized as

$$(2^{1/2}) 3\sigma_T / (2 \times 16) = 0.3\% \text{ to } 0.4\% \qquad (13)$$

Consequently, the additional pit recording operation becomes to be substantially free from the problem of the deviation of the pit interval, which almost prevents the read errors from occurring in the additional pit region in the reproducing operation.

### Second Embodiment

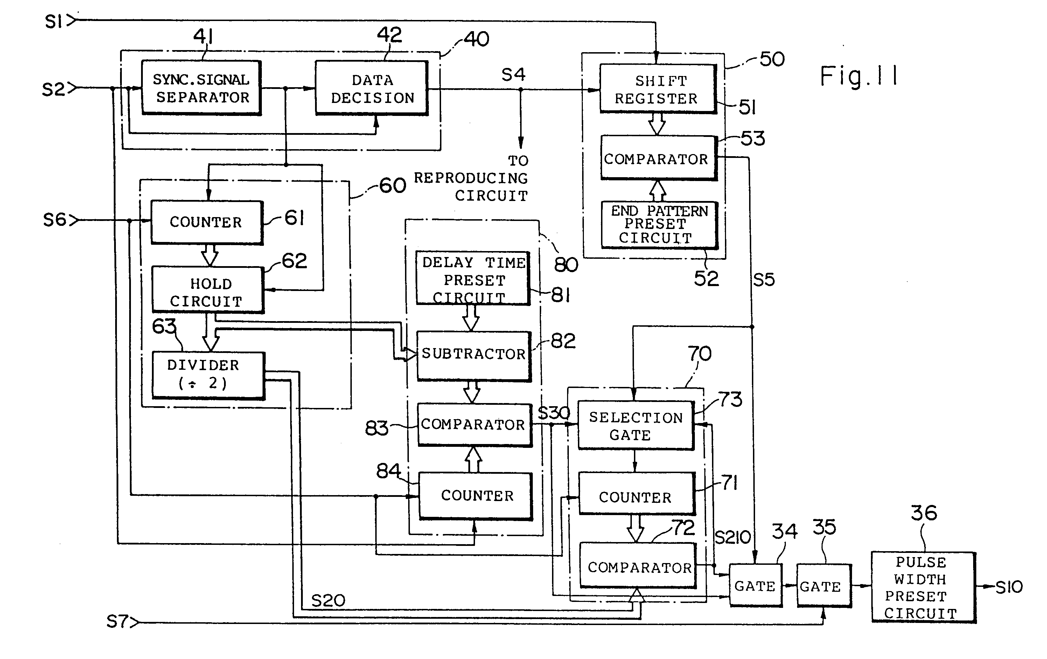

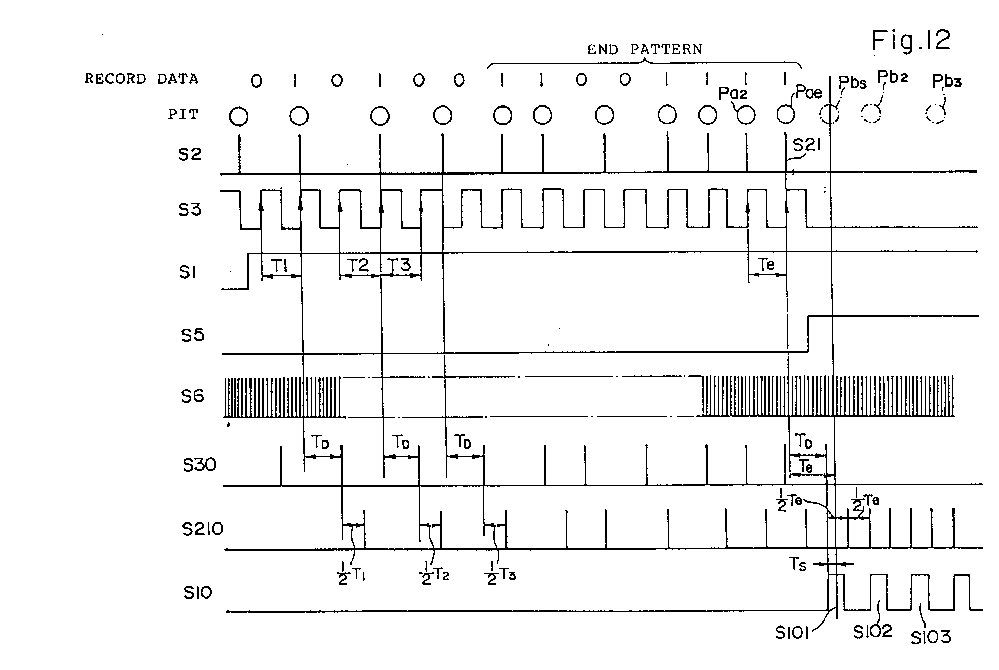

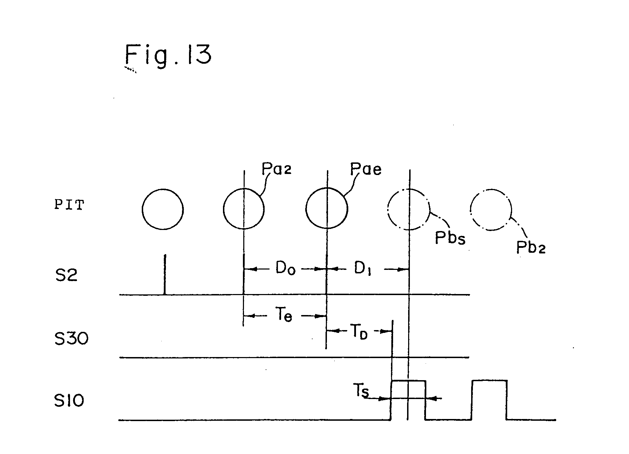

Fig. 11 shows the electric circuit configuration of an embodiment (a second embodiment) of an optical recording and reproducing apparatus according to the second feature of the present invention, Fig. 12 is a signal timing chart useful to explain the operation of the apparatus of Fig. 11, and Fig. 13 shows in a magnified view of the various signals in the proximity of a boundary between a recorded pit and an additional pit to be recorded. In these diagrams, the same constituent elements including circuits and signals as those of the system of the prior invention are assigned with the same reference numerals, and hence a duplicated description thereof will be avoided.

The difference between the configurations of Figs. 11 and 4 resides in that the second embodiment of Fig. 11 additionally includes a circuit 80 for creating a record timing of a first pit to be additionally recorded;

10

moreover, the record pulse leading edge preset circuit 37 of Fig. 37 is omitted.

The first pit record timing generator circuit 80 receives as inputs thereto a pit detection signal S2, a signal designating a period Te of a synchronization signal S3 kept in the count value hold circuit 62 of the time width generator circuit 60, and a high-frequency clock pulse signal S6 to produce a signal S30 designating a generation timing of a record pulse S10 to create a pit Pbs to be recorded next to the last recorded pit Pae. The attained signal S30 is supplied to a gate circuit 34 and a selection gate 73 of a record timing signal genrator circuit 70.

The first pit record timing generator circuit 80 includes a delay time preset circuit 81, a subtractor circuit 82, a comparator 83, and a counter 84. The delay time preset circuit 81 is used to set data representing a period of time Tso from a leading edge of th record pulse S10 to a point of time equivalent to a center of a pit to be recorded by the record pulse S10. The subtractor circuit 82 subtracts the preset time Tso from the period Te of the synchronization signal S3 kept in the count hold circuit 62 to produce a subtraction result as $TD = (Te - Tso)$. The counter 84 is reset by the pit detection signal S2 to start counting the high-frequency clock pulse signals S6 beginning from the initial value set to zero. The comparator circuit 83 compares the subtraction result TD with the count value of the counter 84 to create, when the count value is equal to the output TD from the subtractor circuit 82, a signal S30 indicating a generation timing of the record pulse S10 (S101) for the first pit to be additionally recorded.

The signal S30 is directly fed to the gate 34. This circuit 34 is enabled by an end pattern detection signal S5 produced from a comparator circuit 53. Consequently, a pulse signal S30 produced immediately after the end pattern detection is supplied via the gate circuits 34 and 35 to the pulse width preset circuit 36, which in turn outputs a record pulse S10 (S101).

The first pit pulse signal S30 is also delivered to the selection gate 73 of the record timing signal generator 70. The selection gate 73 supplies in an ordinary state the pulse signal S30 as a first reset signal to the counter 71. When the end pattern detection signal S5 is set to a high level, the selection gate 73 outputs the first pulse signal S30 as a reset signal to the counter 71 and thereafter supplies the record timing signal S210 from the comparator 72 as a second reset signal to the counter 71. The comparator circuit 72 directly supplies the record timing signal S210 to the gater circuit 34.

In consequence, the second and subsequent pits $P_{b2}$, $P_{b3}$, etc. are additionally recorded on the recording medium by the record signal S10 generated based on the record timing signal S210 created from the comparator circuit 72 at an interval Te/2 represented by the time width signal S20 outputted from the divider circuit 63.

Referring now to Fig. 13, an interval $D_1$ between the last recorded pit Pae and the first additional pit Pbs can be expressed as follows:

$$D_1 = (TD + Ts) V = (Te - Tso + Ts) V$$
$$= Te V + (Ts - Tso) V = D_0 + (Ts - Tso) V \quad ..(14)$$

where, Ts denotes a period of time from a point of time of the leading edge of the record pulse S10 to a point of time equivalent to a center of the first additional pit Pbs to be actually recorde by the record pulse S10 and V designates a transportation speed of the optical card 9.

For $V = V_0$, the period of time from a point of time of the leading edge of the record pulse S10 to a point of time equivalent to a center of the first additional pit Pbs is represented as Tso. Consequently, $D_1$ is reduced to

$$D_1 = D_0 + (Ts - Tso) V_0 = D_0 \quad (15)$$

namely, $D_1$ is identical to $D_0$.

When the card speed undegoes a 10% variation, $D_1$ is expressed as

$$D_1 = D_0 + 1.1 V_0 (Ts - Tso) \quad (16)$$

Since the time Tso is a preset constant value and the time Ts varies with the change in the card feeding speed, the last component of the expression (16) is obtained as follows.

11

$$T s - T so = -0.1 T so \quad (17)$$

This leads to

$$1.1 V_0 ( T s - T so) = -0.11 T so V_0 \quad (18)$$

Moreover, since a ratio Ts/TD is about 1/9 for an ordinary optical card, the following relationship results.

$$- 0.11 T so V_0 = -0.11 \times 0.1 D_0 = -0.011 D_0 \quad (19)$$

In consequence, $D_1$ is obtained as

$$D_1 = D_0 -0.011 D_0 = 0.989 D_0 \quad (20)$$

Even when the card speed undergoes a 10% change, the interval $D_1$ between the last recorded pit Pae and the first additional pit Pbs is subjected to a positional variation which is about 1% of the pit interval $D_0$ between the previously recorded pits.

In the prior invention, the 10% speed change leads to an interval variation of about 5% in the interval between the recorded pit and an additional pit with respect to the interval between the recorded pits. In contrast thereto, according to the second embodiment, the pit interval fluctuation can be decreased to about one fifth, which remarkably minimizes a chance of the read error in the reproducing operation.

Third Embodiment

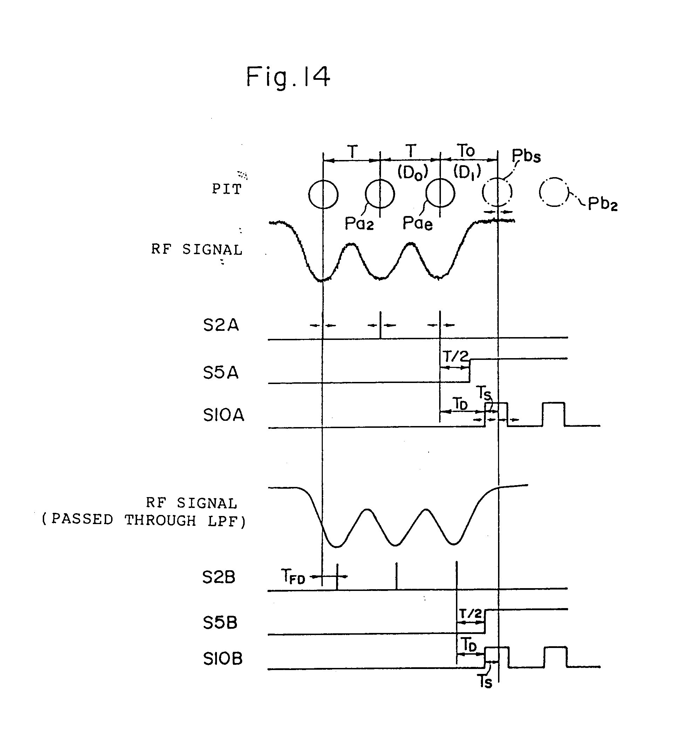

Referring now to Fig. 14, the deviation or fluctuation in an interval $D_1$ (or a period of time $T_0$ corresponding to the interval $D_1$) between the last recorded pit Pae and the first additional pit Pbs depends not only on the variation in the conveyance speed of the optical card 9 but also on a noise component contained in the read signal of the recorded pit.

As above, when forming pits in a new sector following a recorded sector, a series of pits recorded on the sector are read therefrom by the reproducing light projection and reception optical systems. Namely, referring now to the upper-half portion of Fig. 14, a read signal (to be referred to as an RF signal herebelow) produced from a light reception element (the photodiode 31 of Fig. 3) included in the reproducing light reception optical system is employed to generate a pit detection signal S2A. The RF signal contains a noise component having a bandwidth larger than that of frequency components attained by reading the pit, which increases the jitter component (indicated by horizontal arrow marks in the upper-half portion of Fig. 14) in the pit detection signal S2A. The record pulse S10A produced depending on the pit detection signal S2A consequently includes the jitter component, which leads to a fluctuation in the interval (the interval of time $T_0$) between the last recorded pit Pae and the first additional pit Pbs. Since the deviation in the interval of time $T_0$ causes an error in the reproducing operation, it is disirable to possibly minimize the interval of time $T_0$ between the last recorded pit Pae and the first additional pit Pbs.

In order to remove the noise component from the RF signal, a low-pass filter (LPF) is employed in general. Referring here the lower-half portion of Fig. 14, with the provision above, the jitter component is reduced in a pit detection signal S2B created by use of an RF signal processed through the low-pass filter. Based on the pit detection signal S2B, a record pulse S10B is generated for producing a pit. The positional deviation of the pit recorded by the record pulse S10B is minimized and hence the fluctuation in the pit interval $T_0$ is also decreased.

In the signal timing chart of Fig. 14, S5A and S5B stand for end pattern detection signals.

In this situation, however, the apparatus is also attended with a problem of a delay of the RF signal caused by an ineviatble phase delay inherently appearing in the low-pass filter. Assuming the delay time to be $T_{FD}$, only when a condition $T_{FD} < (T/2 - Ts)$ is satisfied, the apparatus of the second embodiment can be used to appropriately record pits on the recording medium, which will be described in detail in the following paragraphs.

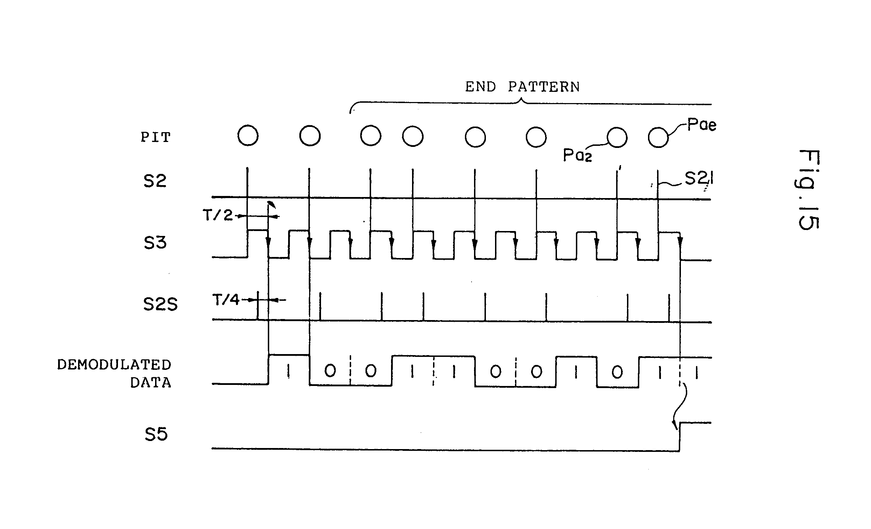

Referring first to Fig. 15, a description will be given of a data demodulation accomplished in the modified frequency modulation (MFM) system. The pit detection signal S2 created depending on the RF signal is fed to a synchronization signal separator circuit 41 including a PLL circuit as described above. The separator circuit 41 actually produces the synchronization signal S3 and an after-synchronization pit signal S2S delayed from the pit detection signal S2 by a delay time T/4. In the demodualtion of the data undergone the MFM operation, if the after-synchronization pit signal S2S is detected while the synchronization signal S3 is being at a high level, the data is decided to have a value "1"; otherwise, the value of data is determined to be "0". In consequence, the data demodulation into binary data is completed at a trailing or falling edge of the synchronization signal S3. Namely, a delay of T/2 appears between an occurence of the pit detection signal S2 and the demodulation completion.

Assuming here the end pattern to be "11001011", when the final data bit "1" thereof is demoduated, the end pattern detection signal S5 is immediately set to an active state. In an additional pit recording operation, when a period of time T/2 is elapsed after the pit detection signal S21 is produced for the final pit Pae, the apparatus identifies the end pattern, thereby granting an output of the record pulse S10.

Let us assume that an interval time $T_0$ exists between the last recorded pit Pae and the first additional pit Pbs, that a delay time $T_{FD}$ is associated with an LPF employed to remove a noise component from the RF signal, that a delay time Ts appears between the leading or rising edge of the record pulse and a point of time equivalent to a center of the pit created by the record signal, and that a reference time TD, which is produced from the additional pit record timing generator circuit 80, exists between an occurrence of a pit detection signal and the leading edge of the record pulse. In this situation,

$$T_0 = T D + T s = T / 2 + T_{FD} + T s \qquad (21)$$

is required to be satisfied. On the other hand, assuming $T_0 = 1T$, in order to record the additional pit,

$$T_{FD} + T s = T / 2 \qquad (22)$$

need be satisfied. Consequently, if a condition

$$T_{FD} < T / 2 - T s \qquad (23)$$

is not satisfied, the end pattern detection cannot be achieved at an appropriate timing which enables the objective record pulse to be outputted. This hence leads to a recording error.

Since the period of time Ts is here about T/10 or less, the condition above may substantially set to $T_{FD} < 0.4T$ in practice.

In a case where the low-pass filter is adopted to decrease the noise component of the RF signal, if the noise component is further to be removed to improve the signal-to-noise ratio, the cutoff frequency of the low-pass filter need be lowered. However, due to the inherent characteristic of the filter, the attenuation performance and the delay time of the filter are incompatible with each other i.e. these characteristic features cannot be simultaneously improved. Namely, if the signal-to-noise ratio is increased, the delay time may exceed 0.4T. For example, when the order of the LPF exceeds four, the delay time possibly exceeds 0.4T in some cases.

On the other hand, when a laser beam is irradiated onto a recording medium to create a hole as a pit, the contour of the pit is varied depending on conditions. Moreover, the laser light may have a waveform distorted due to characteristics of the recording and reproducing optical systems; furthermore, the waveform distortion may be attended with a fluctuation depnding on changes in environmental conditions e.g. in the temperature and humidity.

Under these conditions, the RF signal includes a certain distortion in many cases; consequently, to develop a high signal-to-noise ratio, the low-pass filter need possess a high attenuation capability. However, when the delay time of the filter is limited to a maximum of 0.4T, the attenuation feature is restricted and hence a certain amount of the jitter component is resultantly kept remained in the pit detection signal, which causes a deviation in the additional pit interval $T_0$.

In an optical recording and reproducing apparatus of an embodiment (a third embodiment) of the third feature according to the present invention, to remove a considerably large portion of the noise component from the RF signal, the low-pass filter develops a steep attenuation characteristic. As a result, even when the delay time $T_{FD}$ of the filter is elongated, the apparatus can appropriately record the first additional pit Pbs at a correct position on the recording medium.

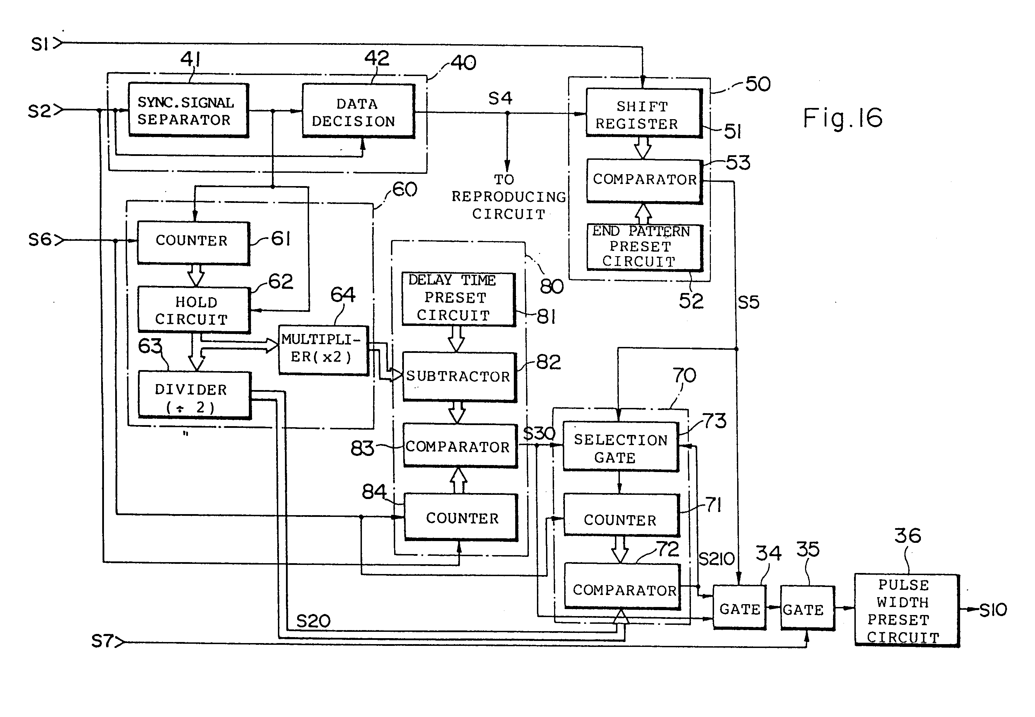

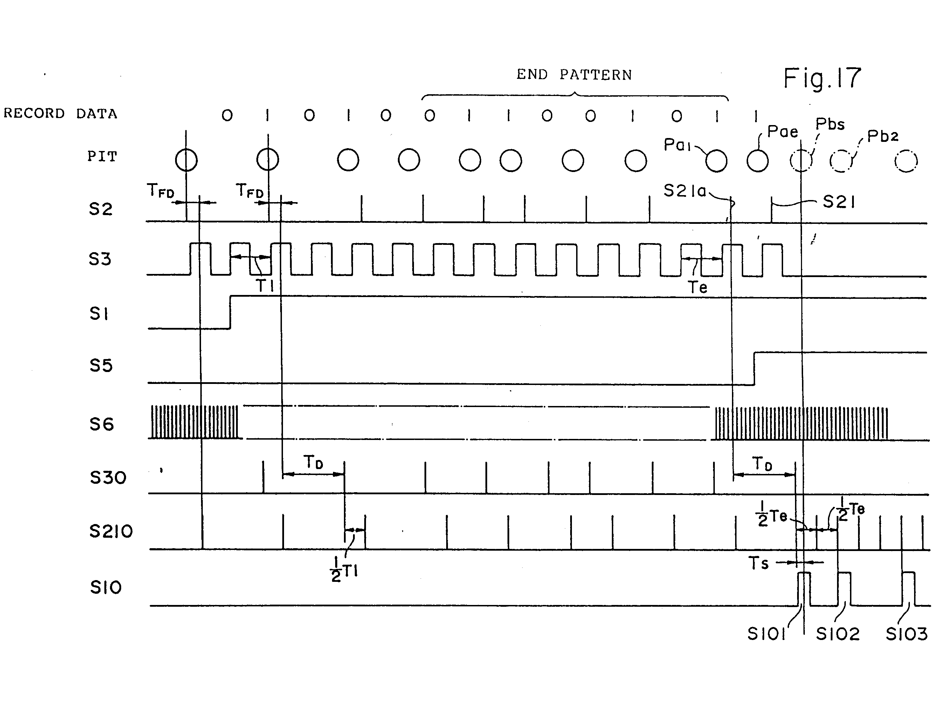

Figs. 16 and 17 respectively show the constitution and an operation timing chart of the optical recording and reproducing apparatus. In these diagrams, the same elements as those of Figs. 11 and 12 related to the second embodiment are assigned with the same reference numerals, and hence a duplicated description thereof will be avoided.

The discrepancy between the third and second embodiments resides in that the time width generator 60 includes a multiplier circuit 64 having a multiplier value of two, that a period of time $T_{FD} + Tso$ is set to the delay time preset circuit 81 of the additional first pit record timing generator 80, and an end pattern obtained by removing the final bit from that used in the second embodiment is established in the end pattern preset circuit 52 of the end pattern detector 50 in the third embodiment.

The count value (which designates a period T1, T2, T3,..., or Te of the synchronization signal S3 and which will be representatively denoted as T herebelow) obtained by the counter 61 of the time width generator 60 and kept in the hold circuit 62 is multiplied by two in the multiplier circuit 64. The obtained signal is then fed to the subtractor circuit 82 of the additional first pit record timing generator 80.

Of the time $T_{FD}$ + Tso established in the preset circuit 81 of the delay time preset circuit 80, $T_{FD}$ is a delay time of the low-pass filter. As shown in Fig. 17, the pit detection signal S2 is delayed by this time $T_{FD}$. The time Tso indicates a period of time from a leading edge of the record pulse S10 to a point of time associated with a center of a pit to be produced by the record pulse S10 as described above (the time Ts is a period of time to be actually consumed and is substantially identical to the time Tso).

The subtractor 82 consequently accomplishes a computation of TD = 2T - ($T_{FD}$ + Tso). Since the counter 84 is reset by the pit detection signal S2, when the period of time TD is elapsed from an occurrence of the pit detection signal S2, the comparator 83 produces a first pit pulse signal S30.

On the other hand, the end pattern preset circuit 52 has been loaded with the pattern data created by removing the final bit of the end pattern previously used. Assuming here that the end pattern is "11001011", the preset circuit 52 accordingly contains a new end pattern "1100101". In the signal timing chart of Fig. 17, when constituting a new end pattern with eight bits, a prceding bit "0" is added to resultantly proudce an end pattern "01100101". Such a bit pattern may be formed only by removing the final bit as described above, namely, a 7-bit pattern as well as an 8-bit pattern created by adding a bit thereto may be employed for the purpose above.

In either case, since the new end pattern is established through the removal of the final bit represented by the last recorded pit Pae, when the second last recoded pit Pa2 is detected, the end pattern detector 50 outputs an end pattern detection signal S5.

Consequently, when the time TD is elapsed from the point of time (related to a pit detection signal S21a) when the second last rcorded pit Pa2 is detected, a first pit pulse signal S30 is supplied via the gate circuit 34 to the pulse width preset circuit 36, thereby creating a first additional record pulse S101.

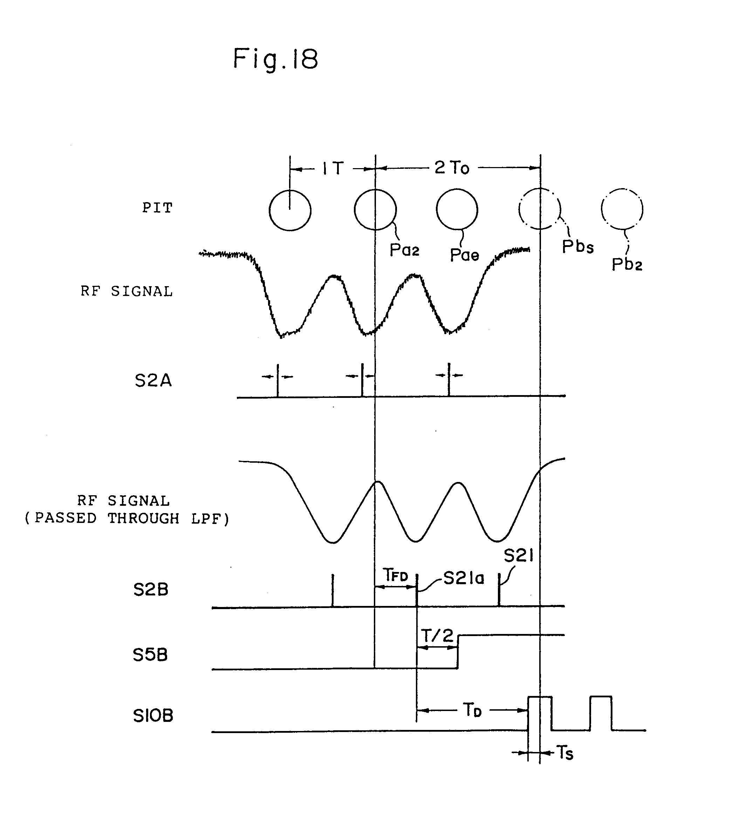

Fig. 18 is a magnified view of the signals in the vicinity of a boundary between a recorded pit and an additional pit. The upper-half portion thereof presents a distorted RF signal developed when a distorted pit series is read from the recording medium and a pit detection signal S2A generated depending on the RF signal, whereas the lower-half thereof shows the RF signal passed through the low-pass filter ($T_{FD}$ > 0.4T), a pit detection signal S2B with a delay time $T_{FD}$ produced in association with the RF signal, and an end pattern detection signal S5B and a record pulse S10B.

The end pattern detection signal S5B is generated when the second last recorded pit Pa2 is detected; moreover, the period of time TD is measured beginning from a point of time related to the detection signal S21a of the pit Pa2. In consequence, even when the low-pass filter has a long delay time $T_{FD}$, the record pulse S10B is produced after the grant for the production thereof is issued in response to an end pattern detection.

Like in the second embodiment, the second and subsequent record pulses S102, S103, etc are created on the basis of a record timing signal S210 produced from the comparator circuit 83 with a period Te/2 expressed by the time width signal S20 from the divider circuit 63.

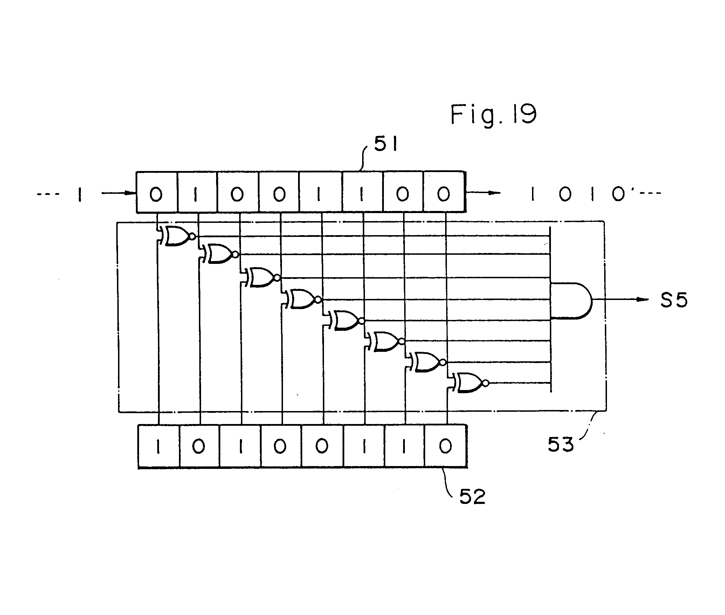

Fig. 19 shows the configuration of the end pattern detector circuit 50. In this constitution, the end pattern preset circuit 52 is loaded with the new end pattern created by removing the final bit as described above. The preset circuit 52 can be constituted with registers and the pertinent pattern data thereof can be easily altered. The comparator circuit 53 includes exclusive-NOR (Ex-NOR) and NAND circuits.

As many apparently widely different embodiments of the present invention are made without departing from the spirit and scope thereof, it is to be understood that the invention is not limited to the specific embodiments thereof except as defined in the appended claims.

## Claims

1.  An optical recording and reproducing apparatus comprising:

    synchronization signal generate means responsive to a detection signal of a pit representing data recorded on a recording medium for generating a synchronization signal synchronized with the pit detection signal;

    time width generate means responsive to the synchronization signal for producing a time width signal representing a period of the synchronization signal; and

14

additional first pit record timing generate means responsive to the pit detection signal and the time width signal for producing a first pit pulse signal denoting a generation timing of a record pulse to form a pit to be recorded subsequently to the recorded pit, wherein said additional first pit record timing generate means includes:

delay time preset means for setting a delay time between a point of time of a leading edge of the record pulse to a point of time associated with a center of a pit to be recorded by use of the record pulse;

subtract means for computing and outputting a difference between the period of the synchronization signal indicated by the time width signal and the delay time established in the delay time preset means; and

signal generate means for creating the first pit pulse signal when a period of time represented by a subtraction result from the subtract means is elapsed after the pit detection signal is received.

2. An apparatus in accordance with claim 1 further including:

data demodulate means for judging to determine a state of the pit detection signal on the basis of the synchronization signal, thereby demodulating data represented by the detected pit;

end pattern detect means for generating an end pattern detection signal when predetermined end pattern data matches data attained by the data demodulate means; and

means for producing the record pulse in response to the first pit pulse signal inputted after the generation of the end pattern detection signal and a record data signal representing data to be recorded.

3. An apparatus in accordance with claim 2 further including:

record timing signal generate means responsive to the first pit pulse signal inputted after the generation of the end pattern detection signal for generating a record pulse leading edge signal with a period which is half the period of the synchronization signal indicated by the time width signal; and

means for producing the record pulse in response to the record pulse leading edge signal and a record data signal representing data to be recorded.

4. An optical recording and reproducing method comprising the steps of:

generating a synchronization signal synchronized with a detection signal of a pit representing data recorded on a recording medium;

producing a time width signal representing a period of the synchronization signal;

setting in advance a delay time from a point of time of a leading edge of a record pulse for forming a pit to be recored next to a recorded pit to a point of time associated with a center of the pit to be recorded by the record pulse;

computing a difference of time between the period of the synchronization signal indicated by the time width signal and the preset delay time; and

creating the first pit pulse signal designating a generation timing of the record pulse when the period of time obtained as a result of the computation is elapsed after the pit detection signal appears.

5. A method in accordance with claim 4 further including the steps of:

judging to determine a state of the pit detection signal based on the synchronization signal, thereby demodulating data represented by the detected pit;

generating an end pattern detection signal when predetermined end pattern data matches data thus demodulated: and

producing the record pulse in response to the first pit pulse signal generated after the generation of the end pattern detection signal and a record data signal representing data to be recorded.

6. A method in accordance with claim 5 further including the steps of:

generating, in response to the first pit pulse signal generated after the generation of the end pattern detection signal, a record pulse leading edge signal with a period which is half the period of the synchronization signal indicated by the time width signal; and

producing the record pulse in response to the record pulse leading edge signal and a record data signal representing data to be recorded.

7. An optical recording and reproducing apparatus comprising:

synchronization signal generate means responsive to a detection signal of a pit representing data recorded on a recording medium for generating a synchronization signal synchronized with the pit detection signal;

time width generate means responsive to the synchronization signal for generating a time width signal representing a time which is twice as long as a period of the synchronization signal; and

additional first pit record timing generate means responsive to the pit detection signal and the time width signal for generating a first pit pulse signal denoting a generation timing of a record pulse to create a pit to be recorded after the recorded pit, wherein said additional first pit record timing generate means includes:

delay time preset means for setting a delay time obtained by adding a first delay time from a point of time of a leading edge of the record pulse to a point of time associated with a center of a pit to be recorded by the record pulse to a second delay time associated with filter means for removing a noise component from a read signal of the pit recorded on a recording medium to generate the pit detection signal;

subtract means for computing and for outputting a difference between the time,which is twice the period of the synchronization signal, indicated by the time width signal and the total delay time established in the delay time preset means, and

signal generate means for creating the first pit pulse signal when a period of time represented by a result of the subtraction accomplished by the subtract means is elapsed after the pit detection signal is received.

8. An apparatus in accordance with claim 7 further comprising:

data demodulate means for judging a state of the pit detection signal based on the synchronization signal, thereby demodulating data represented by the detected pit;

end pattern detect means for producing an end pattern detection signal when predetermined end pattern data created by excepting data represented by a last recorded pit matches data attained by said data demodulate means, and

means for generating the record pulse in response to the first pit pulse signal inputted after an occurrence of the end pattern detection signal and a record data signal representing data to be recorded.

9. An apparatus in accordance with claim 7 further including:

record timing signal generate means responsive to the first pit pulse signal inputted after the generation of the end pattern detection signal for generating a record pulse leading edge signal with a period which is half that of the synchronization signal indicated by the time width signal; and

means for producing the record pulse in response to the record pulse leading edge signal and a record data signal representing data to be recorded.

10. An optical recording and reproducing method comprising the steps of:

generating a synchronization signal synchronized with a detection signal of a pit representing data recorded on a recording medium;

producing a time width signal representing a time which is twice as long as a period of the synchronization signal;

setting in advance a delay time obtained by adding a first delay time from a point of time of a leading edge of a record pulse for forming a pit to be recorded subsequently to the recorded pit to a point of time associated with a center of the pit to be recorded by the record pulse to a second delay time of a filter means for removing a noise component from a read signal of the pit recorded on the recording medium to generate the pit detection signal;

computing a difference of time between the time, which is twice the period of the synchronization signal, indicated by the time width signal and the total delay time preset in advance; and

creating the first pit pulse signal designating a generation timing of the record pulse when the period of time obtained as a result of the computation is elapsed after the pit detection signal appears.

11. A method in accordance with claim 10 further including the steps of:

judging a state of the pit detection signal based on the synchronization signal, thereby demodulating data represented by the detected pit;

generating an end pattern detection signal when predetermined end pattern data created by excepting data represented by a last recorded pit matches data thus demodulated; and

generating the record pulse in response to the first pit pulse signal generated after an occurrence

16

of the end pattern detection signal and a record data signal representing data to be recorded.

12. A method in accordance with claim 11 further including the steps of:

generating, in response to the first pit pulse signal generated after the generation of the end pattern detection signal, a record pulse leading edge signal with a period which is half that of the synchronization signal indicated by the time width signal; and

producing the record pulse in response to the record pulse leading edge signal and a record data signal representing data to be recorded.

13. An optical recording and reproducing apparatus comprising;

synchronization signal generate means responsive to a detection signal of a pit representing data recorded on a recording medium for generating a synchronization signal synchronized with the pit detection signal;

time width generate means responsive to the synchronization signal for producing a time width signal representing a time width related to a period of the synchronization signal; and

timing signal generate means for creating a record timing signal having a delay associated with the period of the synchronization signal relative to a point of time when the pit detection signal is detected,

said time width generate means including frequency divide means for dividing the frequency of the synchronization signal.

Fig. 1    PRIOR ART

| | | | | | | | |
|---|---|---|---|---|---|---|---|
| $e_2$ | $a_1$ | $a_2$ | $b_1$ | $b_2$ | $c_1$ | $c_2$ | $d_1$ | $d_2$ |

1 TRACK

SECTOR A — SECTOR B — SECTOR C — SECTOR D

Fig. 2    PRIOR ART

SECTOR A        SECTOR B

Fig.3

Fig.4

EP 0 467 312 A2

# Fig.5

41

S2

PC        LPF        VCO

43        44        45

S3

DATA
DECISION

S4

42

Fig.6

EP 0 467 312 A2

Fig.7

# Fig.8

Fig.9

EP 0 467 312 A2

# Fig. 10

Fig.11

Fig.12

EP 0 467 312 A2

# Fig. 13

# Fig. 14

Fig. 15

Fig.16

EP 0 467 312 A2

Fig.17

EP 0 467 312 A2

# Fig.18

Fig.19